# EUROPEAN PATENT SPECIFICATION

(11) **EP 2 272 740 B1**
(45) Date of publication and mention of the grant of the patent: **29.07.2015**
(21) Application number: 10166982.8
(22) Date of filing: 23.06.2010
(51) Int. Cl.: B62J 1/12, B62K 19/46, F02M 35/04

(54) **Motorcycle**
Motorrad
Motocyclette

(30) Priority: 03.02.2010 JP 2010022360; 07.07.2009 JP 2009161100
(43) Date of publication of application: 12.01.2011
(73) Proprietor: Yamaha Hatsudoki Kabushiki Kaisha, Iwata-shi, Shizuoka 438-8501 (JP)
(72) Inventor: Kurihara, Koji, Shizuoka-ken 438-8501 (JP); Miyoshi, Nobuyuki, Shizuoka-ken 438-8501 (JP)
(74) Representative: Grünecker Patent- und Rechtsanwälte PartG mbB

(56) References cited:
- EP-A2- 1 122 159
- JP-A- 1 223 091
- JP-A- 60 154 964
- JP-U- 4 050 594
- KR-A- 20080 046 554
- US-A- 4 726 439
- US-A- 5 433 286

## Description

The present invention relates to motorcycles. The invention more particularly relates to a structure of a storage box in a motorcycle provided with a footboard.

Motorcycles with unit-swing type power units have been known. The power unit has an engine. The unit-swing type power unit is swingably supported at a vehicle frame.

A motorcycle including a power unit is disclosed by JP 2007-168530 A. In the motorcycle disclosed by JP 2007-168530 A, a footboard is provided in front of and below a seat on which a rider is seated. In the motorcycle including the footboard, the rider places his/her feet on the footboard during traveling. The rider can thus ride in an easy posture. This makes it easy for the rider to get on and off from the motorcycle.

In the motorcycle disclosed by JP 2007-168530 A, the unit swing type power unit having an engine is provided under the seat. A storage box is provided under the seat. The engine has its cylinder axial line extended generally forward. The engine includes a cylinder head and an intake duct that extends upward and backward is connected to the cylinder head. An air cleaner is connected to a rear end of the intake duct. Intake related components extending from the air cleaner to the cylinder head through the intake duct are provided forward and downward. The air cleaner is provided above the engine and under a rear part of the storage box. A vehicle body cover used to cover sides of the vehicle body is provided below the seat.

In the motorcycle disclosed by JP 2007-168530 A as it is seen in a side view, a lower edge of the vehicle body cover extends backward and upward and a space is formed between the lower edge of the vehicle body cover and a rear wheel with respect to the vertical direction. The power unit is swingably supported at a vehicle body frame through a pivot shaft. The pivot shaft is provided below the power unit.

The motorcycle disclosed by JP 2007-168530 A is provided with a footboard in front of the seat and in a position lower than the seat. The motorcycle including the footboard allows the rider to get on and off easily and the rider can stay in a comfortable position during traveling.

The footboard is preferably provided in the lowest possible position in order to secure rider's comfort. When the footboard is provided in the lowest possible position as the rider's comfort is given priority, a space under the footboard is reduced. This makes it difficult to provide the storage box under the footboard. Since no space can be secured under the footboard, the storage box must be provided under the seat. Since the storage box and the air cleaner must be provided under the seat, the storage box and the air cleaner cannot have a sufficient capacity.

Furthermore, the air cleaner must be provided in a location free from water, dust and the like. It would be difficult to provide the storage box and the air cleaner in the narrow space under the seat while satisfying the condition.

Further, EP 1 122 159 A2 shows a motorcycle according to the preamble of claim 1.

It is an object of the preferred embodiment of the present invention to reduce water, dust and the like coming into an air cleaner and secure a sufficient capacity for a storage box without degrading rider's comfort in a motorcycle including a footboard.

Such an object is achieved by the motorcycle according to claim 1. Further preferred embodiments of the motorcycle of the present invention are recited within claims 2 to 15.

A motorcycle according to a preferred embodiment of the present invention includes a power unit, a seat, a footboard, an air cleaner, an intake path, and a storage box. The power unit includes an engine having a cylinder inclined forward. The seat is provided over the power unit. The footboard has at least a part provided in front of the seat when seen in a plan view. The air cleaner is provided above the power unit and under the seat and has an air outlet at a rear surface. The intake path connects the air outlet of the air cleaner and an upper surface of the cylinder. The storage box is provided above the power unit and under the seat. The seat includes a first portion that extends backward from a front end of the seat and a second portion provided behind the first portion. The width of the rear end of the first portion in the vehicle left-right direction is larger than the width of the front end in the vehicle left-right direction, and the second portion has at least a part whose width in the vehicle left-right direction is larger than the width of the front end. The air cleaner is provided under the first portion of the seat and over the cylinder. The storage box includes a front portion positioned under the first portion of the seat and over the air cleaner, and a rear portion positioned under the second portion of the seat. An upward concave portion is formed at the bottom of the storage box, and the intake path is provided under the concave portion, so that the storage box and the intake path overlap in a side view.

According to the present invention, in a motorcycle including a footboard, water, dust and the like coming into an air cleaner can be reduced and a storage box can have a sufficient capacity without degrading rider's comfort.

Other features, elements, steps, characteristics and advantages of the present invention will become more apparent from the following detailed description of the preferred embodiments of the present invention with reference to the attached drawings.
Fig. 1 is a left side view of a motorcycle 1 according to a preferred embodiment of the present invention.
Fig. 2 is a left side view of the motorcycle 1 showing a peripheral structure of an engine 8.
Fig. 3 is a left side sectional view showing the engine 8 and a peripheral structure of an air cleaner 30.
Fig. 4 is a plan sectional view showing a structure of a pivot shaft 18.
Fig. 5 is a plan view of a seat 3.
Fig. 6 is a right side view of the air cleaner 30.
Fig. 7 is a front view of the air cleaner 30.
Fig. 8 is a bottom view of the air cleaner 30.
Fig. 9 is a sectional view of an intake duct 37.
Fig 10 is a plan view of a storage box 50.
Fig. 11 is a left side view of the storage box 50.
Fig. 12 is a front view of the storage box 50.
Fig. 13 is a perspective view of the air cleaner 30 and the storage box 50 as seen from the lower left.
Fig. 14 is a left side view of the seat 3 and the peripheral structure of the storage box 50.
Figs. 15A to 15C are front sectional views of the seat 3 and the storage box 50.
Fig. 16 is a left side view of the storage box 50 having a helmet 10 stored therein.
Fig. 17 is a left side view of the air cleaner 30 and the storage box 50.
Fig. 18 is a left side view of an engine 8 and a peripheral structure of an air cleaner 30 according to a second preferred embodiment of the present invention.

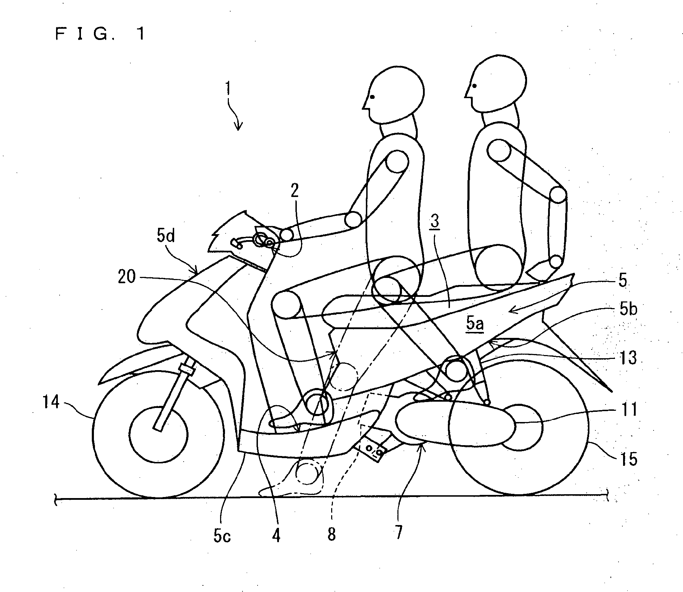

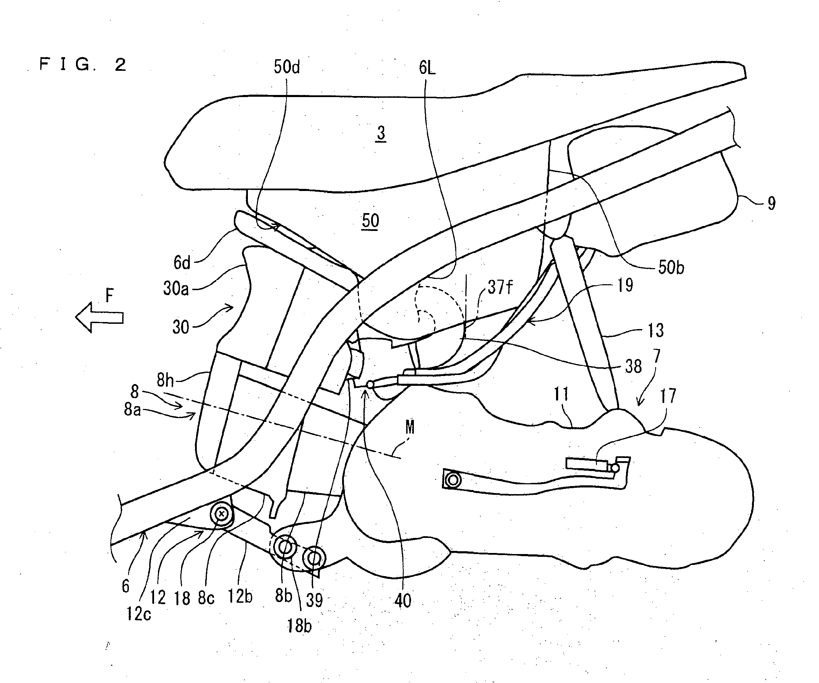

Now, a first preferred embodiment of the present invention will be described in conjunction with the accompanying drawings. Fig. 1 is a left side view of a motorcycle 1 according to the present preferred embodiment. As shown in Fig. 1, the motorcycle 1 is a scooter type motorcycle. The motorcycle according to the present preferred embodiment is a vehicle including a power unit having an engine. The motorcycle according to the present preferred embodiment has the power unit attached to a vehicle body frame in a swingable manner and includes a scooter type vehicle. In the following description, the front-back or left-right direction refers to the direction seen from a rider seated on a seat 3. The vehicle widthwise direction is the same as the left-right direction. In Fig. 2 and the other figures, F indicates the forward direction of the vehicle.

The motorcycle 1 includes a front wheel 14 and a rear wheel 15. A handle 2 is provided above the front wheel 14. The seat 3 is provided above the rear wheel 15. A footboard 4 is provided between the handle 2 and the seat 3 with respect to the front-back direction. While the motorcycle 1 travels, the feet of the rider are placed at the footboard 4.

According to the present preferred embodiment, the footboard 4 is flat shaped. However, the form of the footboard 4 is not particularly limited and does not have to be flat. The footboard 4 may have a part higher than the other part. For example, a part approximately in the center of the vehicle in the left-right direction may be higher than an outer side in the left-right direction of the vehicle. The footboard 4 may be provided each on the left and right and an upward projection may be formed between the left and right footboards. The footboard 4 may be anything that has a support portion on which the feet can be placed in a comfortable position for the rider.

Fig. 1 shows a rider and a passenger. The foot of the rider placed on the footboard 4 is indicated by a solid line. The foot of the rider touching the ground surface is drawn by a chain dotted line. The passenger behind the rider is seated at the rear part of the seat 3.

The motorcycle 1 includes a head pipe, a front frame, an under frame that are not shown. The head pipe is provided under the handle 2. The front frame is connected to the head pipe to extend backward and downward. The under frame is connected to a rear part of the front frame to extend in the front-back direction under the footboard 4.

The vehicle body of the motorcycle 1 is covered with a vehicle body cover 5. The vehicle body cover 5 includes a front cover 5d, an under cover 5c and a rear cover 5a. The rear cover 5a is provided below the seat 3. The rear cover 5a covers a storage box 50 and an air cleaner 30 (Fig. 2) that will be described. The rear cover 5a extends backward and upward. The lower edge of the rear cover 5a is apart from and above the rear wheel 15.

Fig. 2 is a left side view of the motorcycle showing a peripheral structure of the engine 8. The motorcycle 1 includes left and right rear frames 6L and 6R. The left and right rear frames 6L and 6R are connected to the under frame and extend backward and upward. A coupling frame 6d is provided between the left and right rear frames 6L and 6R. The head pipe, the front frame, the under frame, and the rear frames 6L and 6R form a vehicle body frame 6. The seat 3 is supported at the left and right rear frames 6L and 6R.

The motorcycle 1 includes a power unit 7. The power unit 7 is provided under the seat 3. The power unit 7 includes an engine 8 and a transmission case 11.

The transmission case 11 stores a power transmission mechanism that transmits the power of the engine 8 to the rear wheel 15. The transmission case 11 supports the rear wheel 15. The transmission case 11 is provided at the left side of the vehicle body. The rear wheel 15 is coupled to the power unit 7 behind the engine 8.

A kick pedal 17 is provided at a left side surface of the power unit 7. When the kick pedal 17 is operated by the rider, the crankshaft 27 of the engine 8 rotates, which starts the engine 8. The engine 8 may be started by an engine starting motor that is not shown.

A fuel tank 9 is provided above the power unit 7 and under the rear part of the seat 3. The fuel tank 9 is connected to an intake amount regulator 40 through a fuel hose 19. As will be described, the intake amount regulator 40 according to the present preferred embodiment is a carburetor.

The storage box 50 is provided under the seat 3. The air cleaner 30 is provided over a cylinder 8a and under the storage box 50. The air cleaner 30 swings around a pivot shaft 18 together with the power unit 7. The air cleaner 30 is fixed to the engine 8 and swings relative to the rear frames 6L and 6R together with the power unit 7.

Referring to Fig. 1, the footboard 4 is provided in front of the seat 3 when seen in a plan view. The rear end of the footboard 4 overlaps the seat 3 when seen in a plan view, and at least a part of the footboard 4 projects ahead of the seat 3 when seen in a plan view. The footboard 4 is provided ahead of the power unit 7.

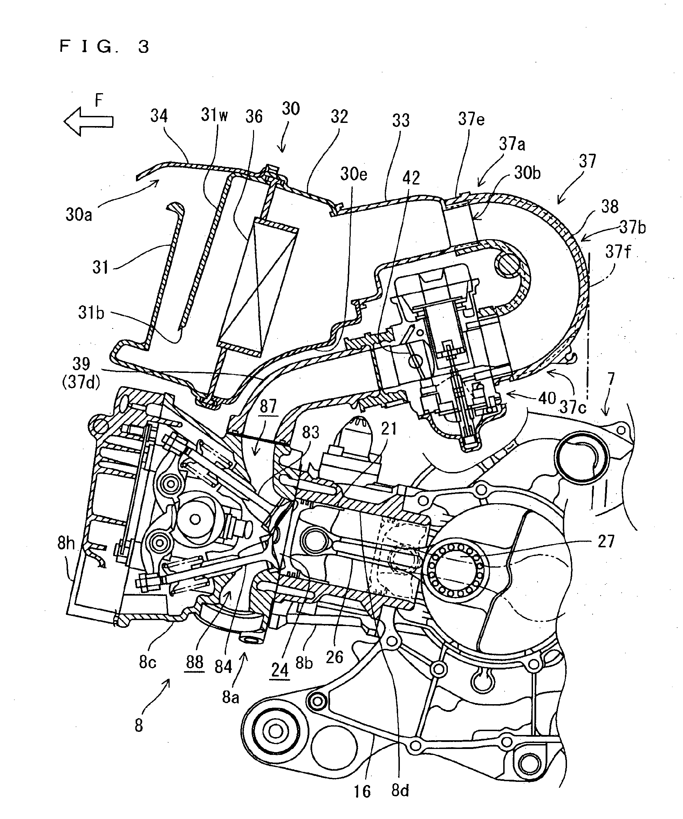

Fig. 3 is a left side sectional view of the engine 8 and a peripheral structure of the air cleaner 30. As shown in Fig. 3, the power unit 7 includes the engine 8 and the transmission case 11. The engine 8 includes a crankcase 16 and the cylinder 8a. The cylinder 8a includes a cylinder body 8b, a cylinder head 8c, and a head cover 8h.

The crankcase 16 stores the crankshaft 27. The cylinder body 8b is provided in front of the crankcase 16 and supports a piston 21 in a reciprocable manner. The cylinder head 8c is provided in front of the cylinder body 8b and has an intake port 87. The head cover 8h is provided in front of the cylinder head 8c.

The cylinder axial line M of the engine 8 extends forward and upward (Fig. 2). The engine 8 is a water-cooled single cylinder 4-cycle engine. The type of the engine 8 is not particularly limited. The engine 8 may be an air cooled type or multi-cylinder type engine.

One cylinder hole 8d is formed on the inner side of the cylinder body 8b. The cylinder hole 8d, the cylinder head 8c, and the piston 21 form a combustion camber 24. The crankshaft 27 is coupled to the piston 21 through a connecting rod 26. The crankshaft 27 has its axial line extended in the left-right direction of the vehicle and is supported rotatably by the crankcase 16.

An intake duct 37 and an exhaust pipe that is not shown are connected with the cylinder head 8c. The intake duct 37 is coupled to the combustion chamber 24 through the intake port 87 formed at the cylinder head 8c. The exhaust pipe is coupled to the combustion chamber 24 through an exhaust port 88 formed at the cylinder head 8c.

The intake port 87 is provided with an intake valve 83. The intake valve 83 is driven up and down relative to the axial line of the valve, so that the connecting state between the intake port 87 and the combustion chamber 24 is switched. The exhaust port 88 is provided with an exhaust valve 84. The exhaust valve 84 is driven up and down relative to the axial line of the valve, so that the connecting state between the exhaust port 88 and the combustion chamber 24 is switched.

The transmission case 11 stores a belt type continuously variable transmission. Torque generated by the crankshaft 27 is transmitted to the rear wheel 15 from the power unit 7 through a centrifugal clutch. The centrifugal clutch switches the transmission state of the power to the rear wheel 15 based on the rotation speed of the crankshaft 27. More specifically, the motorcycle 1 includes a so-called automatic transmission device. The form of the transmission device provided in the motorcycle 1 is not particularly limited.

The power unit 7 is a so-called unit swing type device and swings in the vertical direction together with the rear wheel 15 around the pivot shaft 18. As shown in Fig. 2, the power unit 7 is supported swingably at the vehicle body frame 6 through a link mechanism 12. Link members 12b and brackets 12c are provided between the vehicle body frame 6 and the engine 8. The pivot shaft 18, the link members 12b, the brackets 12c and the like form the link mechanism 12. A cushion member 13 is provided between the power unit 7 and the rear frames 6L and 6R.

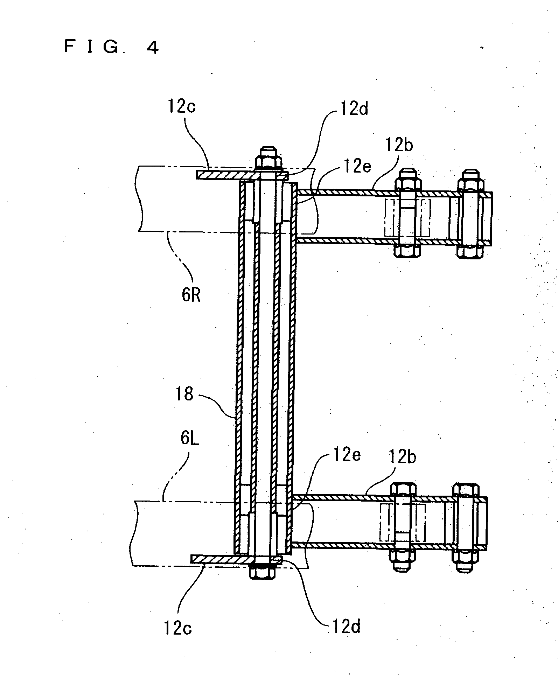

Fig. 4 is a plan sectional view of a support structure of the pivot shaft 18. As shown in Fig. 4, the pivot shaft 18 has its ends supported at left and right holes 12d formed at the left and right brackets 12c. The pivot shaft 18 is inserted in left and right holes 12e formed at a front part of the left and right link members 12b on the inner side of the left and right brackets 12c. The pivot shaft 18 extends in the left-right direction of the vehicle. The brackets 12c are fixed to the rear frames 6L and 6R. The front part of the link member 12b is supported in a swingable manner around the pivot shaft 18 relative to the bracket 12c. An engine side support shaft 18b (Fig. 2) is supported in a hole formed at the engine 8 and a hole formed at the rear part of the link member 12b and extends in the left-right direction of the vehicle.

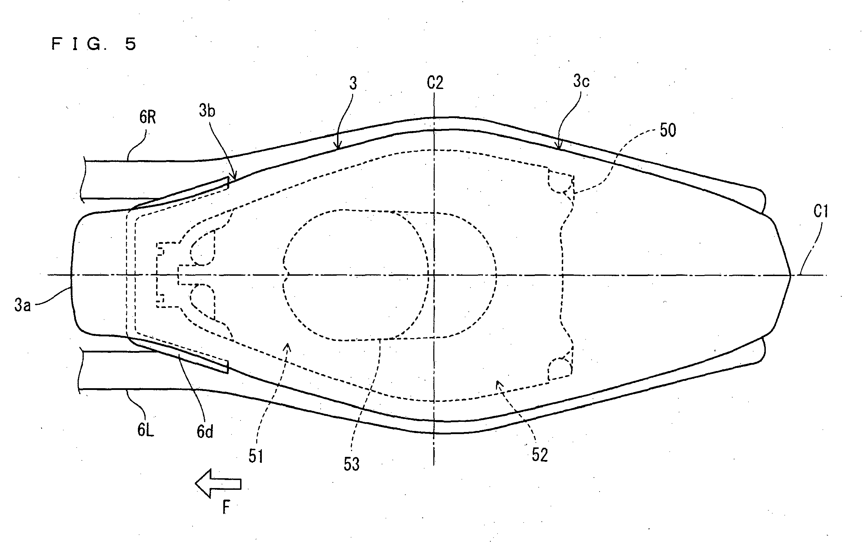

Fig. 5 is a plan view of the seat 3. The seat 3 is supported at the frames 6L and 6R. As shown in Fig. 5, the seat 3 includes a first portion 3b positioned in a front part and a second portion 3c in a rear part. The first portion 3b is a region that extends from the front end 3a of the seat 3 to a vicinity of the center of the seat 3 in the front-back direction. The second portion 3c is a region that continues from a vicinity of the center of the seat 3 in the front-back direction toward the back. Fig. 5 shows the central line C1 of the seat 3 that extends in the front-back direction. The central line C1 indicates the center of the seat 3 in the left-right direction.

The straight line C2 indicated in Fig. 5 defines the boundary between the first portion 3b and the second portion 3c of the seat 3 and extends in the left-right direction of the motorcycle 1. The straight line C2 therefore indicates the rear end of the first portion 3b. The portion of the seat 3 ahead of the straight line C2 is the first portion 3b and the second portion 3c is a part of the portion behind the straight line C2. The width of the rear end of the first portion 3b in the vehicle left-right direction is wider than the width of the front end 3a in the vehicle left-right direction. The width of at least a part of the second portion 3c in the vehicle left-right direction is wider than the width of the front end 3a in the vehicle left-right direction. The fuel tank 9 is provided under the second portion 3c of the seat 3.

The first portion 3b has its width in the vehicle left-right direction gradually expanded toward the straight line C2 from the front end 3a. The second portion 3c has its width in the vehicle left-right direction gradually narrowed from the straight line C2 toward the rear end. As for the shape of the second portion 3c, its width in the vehicle left-right direction may be unchanged from the straight line C2 to the rear end. As for the shape of the second portion 3c, its width may extend to have the same width from the straight line C2 to the back and may have its width in the vehicle left-right direction gradually narrowed in the rear part of the second portion 3c.

As can be understood from Fig. 1, the rider is seated on the first portion 3b. The passenger is seated on the second portion 3c. During travelling, the rider's feet are placed on the footboard 4. As can be seen from Fig. 1, when the rider's feet are placed on the footboard 4, the rider's thighs are positioned at the first portion 3b. The front end 3a of the first portion 3b is narrowed, so that seating comfort can be secured.

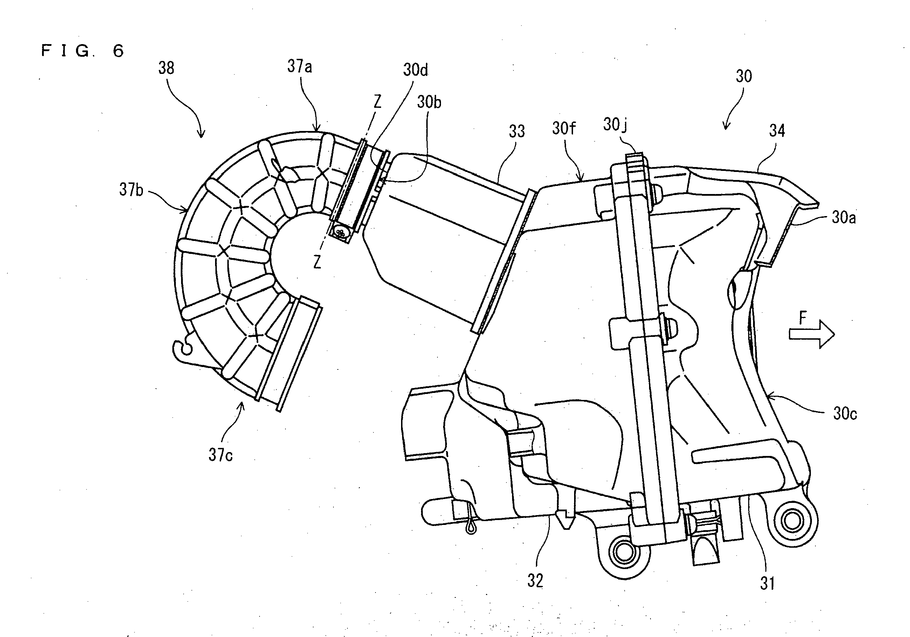

Fig. 6 is a right side view of the air cleaner 30. As shown in Fig. 6, the air cleaner 30 has a front case 31, a rear case 32, a funnel portion 33, and an upper cover 34. The front case 31, the rear case 32, and the funnel portion 33 are provided in the mentioned order from the front toward the back. The air cleaner 30 has an air inlet 30a and an air outlet 30b. Air is introduced through the air inlet 30a from the front of the air cleaner 30 into the air cleaner 30. Air in the air cleaner 30 is discharged from the air outlet 30b from behind the air cleaner 30. As shown in Fig. 3, a filter 36 is provided in the air cleaner 30. The filter 36 cleans air taken into the air cleaner 30.

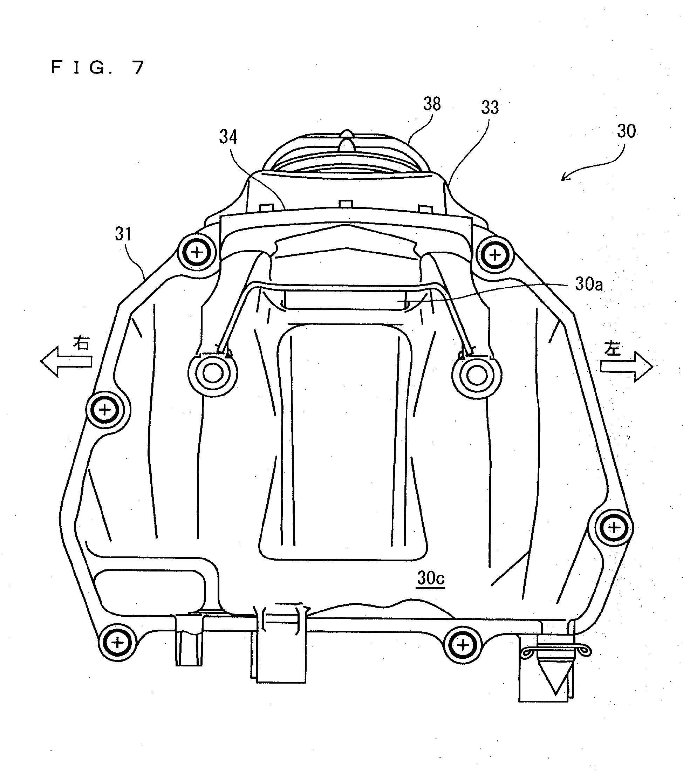

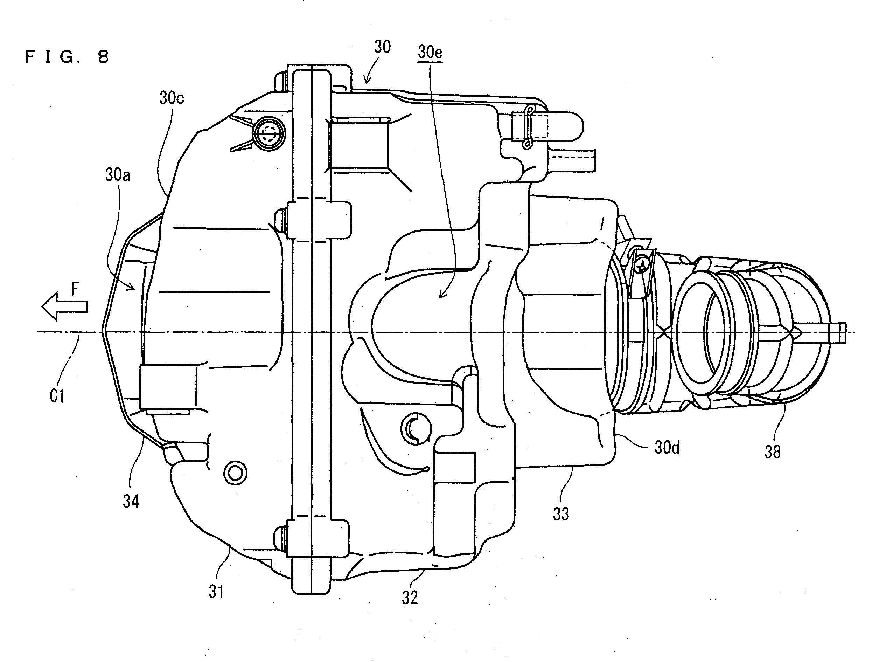

Fig. 7 is a front view of the air cleaner 30. Fig. 8 is a bottom view of the air cleaner 30. As shown in Figs. 6 to 8, the air inlet 30a is provided at a front surface 30c of the air cleaner 30. The air inlet 30a is formed at the front case 31 and the upper cover 34. The air inlet 30a is formed above the intermediate position of the front surface 30c of the air cleaner 30 in the vertical direction. The top of the air inlet 30a is covered with the upper cover 34, and the air cleaner 30 allows air below the air cleaner 30 to be easily introduced. The upper cover 34 prevents dust or the like floating above the air cleaner 30 from coming into the air cleaner 30.

As shown in Fig. 1, the vehicle body cover 5 has a seat cover 20 that extends upward from the rear part of the footboard 4. The seat cover 20 is provided in front of the air cleaner 30. The seat cover 20 is a part of the rear cover 5a. According to the present preferred embodiment, the seat cover 20 can be separated as a part of the rear cover 5a. However, the seat cover 20 may be formed integrally with the rear cover 5a, or the manner of dividing the cover is not particularly limited. The under cover 5c is provided under the seat cover 20.

As shown in Fig. 2, the air cleaner 30 is provided above the engine 8 and under the lower surface 50d of the storage box 50. As shown in Fig. 1, the upper part of the engine 8 is at least covered with the vehicle body cover 5 including the front cover 20, and therefore the air cleaner 30 is not directly exposed to water, dust or the like from the outside of the vehicle body.

Referring back to Fig. 3, a straightening vane 31w is provided inside the front case 31. The straightening vane 31w extends downward from the upper surface of the front case 31. Although not shown, the straightening vane 31w extends in the vertical direction in a vicinity of the center of the front case 31 in the left-right direction of the vehicle. The straightening vane 31w is not provided at the left and right ends in the front case 31. Air coming into the air cleaner 30 through the air inlet 30a is made to flow downward from the upper part of the front cases 31 along the surface of the straightening vane 31w by the straightening vane 31w. Air that flows in the lower part in the front case 31 is directed to the filter 36 from the lower end 31b of the straightening vane 31w. In this way, in the air cleaner 30, air coming in from the air inlet 30a flows smoothly to the filter 36. A sufficient path length is secured from the air inlet 30a to the filter 36 in the air cleaner 30.

As shown in Fig. 6, the air outlet 30b is formed at the rear surface 30d of the air cleaner 30. The air outlet 30b is formed at the rear end of the funnel portion 33 provided on the rear side of the air cleaner 30. In the air cleaner 30, air is introduced from the front and inside air is discharged to the back. The air outlet 30b has an elliptical section having the major axis in the vehicle left-right direction and the minor axis in the vertical direction. The air outlet 30b has a flat shape having a shorter length in the vertical direction than in the horizontal direction.

As shown in Fig. 6, the rear surface 30d is directed backward and obliquely upward. The air cleaner 30 has an upper surface 30f. The upper surface 30f is inclined slightly downward toward the back. The upper surface 30f includes the upper surfaces of the rear case 32 and the front case 31. More specifically, the upper surfaces of the rear case 32 and the front case 31 are inclined slightly downward toward the back. The air outlet 30b is provided below the upper end 30j of the air cleaner 30. The upper end 30j of the air cleaner 30 is positioned at the upper surface 30f. The upper end 30j of the air cleaner 30 is positioned at the flange part of the air cleaner 30 where the rear case 32 and the front case 31 are connected.

As shown in Fig. 8, an upward concave portion 30e is formed at a bottom of the air cleaner 30. More specifically, an upwardly curved part is formed at a bottom of the air cleaner 30. The concave portion 30e is positioned above the other part of the bottom. The concave portion 30e is positioned in the center of the air cleaner 30 in the left-right direction of the vehicle. The concave portion 30e overlaps the central line C1 of the seat 3 that extends in the front-back direction. The concave portion 30e is positioned in the rear part of the air cleaner 30 in the front-back direction of the vehicle. The concave portion 30e is formed in the rear case 32.

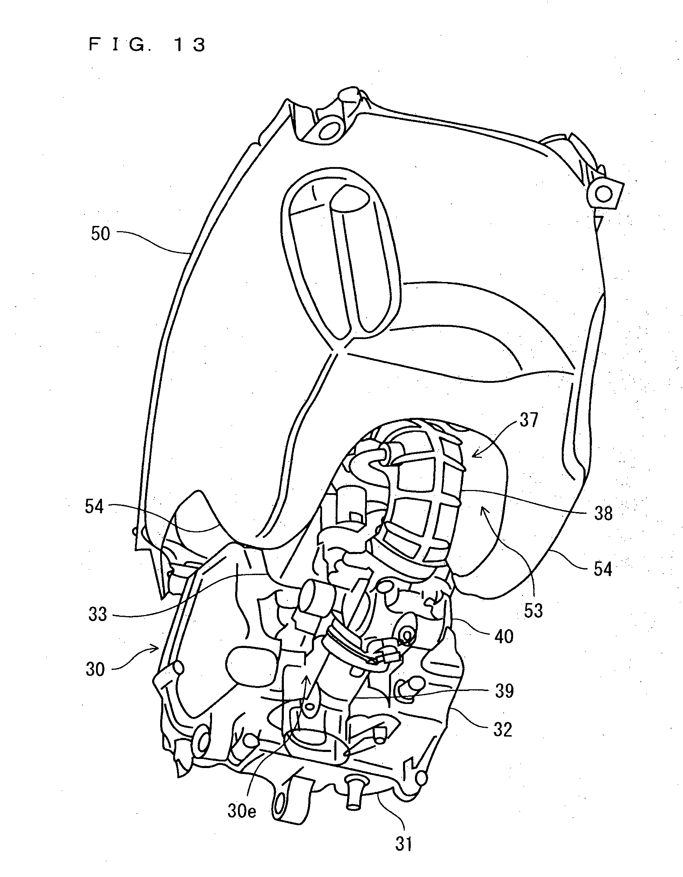

As shown in Fig. 3, the concave portion 30e is formed to extend from a bottom of the rear case 32 to the rear end. The width of the concave portion 30e is greater in a rear part than in a front part. The concave portion 30e is open toward the back at the rear end of the rear case 32 (for example in Fig. 13). As will be described, at least a part of the intake duct 37 is provided under the concave portion 30e to overlap the air cleaner 30 when seen in a side view. According to the present preferred embodiment, the concave portion 30e is formed at a bottom of the rear case 32. According to the present preferred embodiment, at least a part of the intake duct 37 positioned over the cylinder head 8c is provided under the concave portion 30e.

As shown in Fig. 3, the intake duct 37 and the intake amount regulator 40 are provided between the cylinder head 8c of the engine 8 and the air cleaner 30. The intake duct 37 and the intake amount regulator 40 form an intake path between the engine 8 and the air cleaner 30. The intake duct 37 connects the intake port 87 of the cylinder head 8c and the air outlet 30b of the air cleaner 30.

The intake duct 37 has an approximately U-shape when seen from a side of the vehicle body. The intake duct 37 has a part that extends generally backward from the air cleaner 30 and is then curved downward and further generally forward. The term "generally backward" simply refers to backward extension regardless of its angle. For example, it may extend in the horizontal direction or may be inclined from the horizontal direction. The term "generally forward" simply refers to forward extension regardless of its angle. For example, it may extend in the horizontal direction or it may be inclined from the horizontal direction.

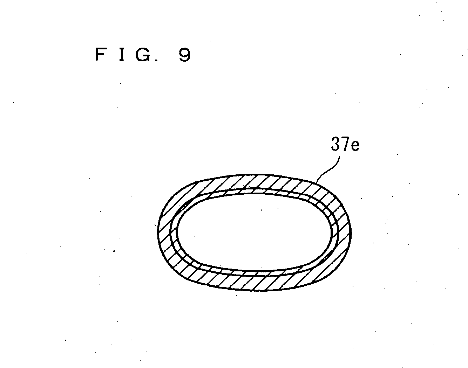

As shown in Fig. 9, the connection portion 37e of the intake duct 37 has a flat shape whose vertical length is shorter than its horizontal length. As the connection portion 37e is connected to the air outlet 30b, the intake duct 37 is connected to the air cleaner 30.

The intake duct 37 includes a first pipe 38 used to connect the air cleaner 30 and the intake amount regulator 40. The intake duct 37 includes a second pipe 39 used to connect the intake amount regulator 40 and the cylinder 8a. As will be described, the first pipe 38 has a first portion 37a, a second portion 37b, and a third portion 37c. The second pipe 39 has a fourth portion 37d.

As shown in Fig. 3, the intake amount regulator 40 used to regulate the amount of air to be passed inside the intake duct 37 is provided between the first pipe 38 and the second pipe 39. The intake amount regulator 40 has a capacity smaller than that of the air cleaner 30. The intake amount regulator 40 is provided behind the air cleaner 30 in the side view. The intake amount regulator 40 is provided under the air cleaner 30 in the side view. The intake amount regulator 40 is provided under the storage box 50 (Fig. 2). According to the present preferred embodiment, the intake amount regulator 40 is a carburetor. The intake amount regulator 40 includes a throttle valve 42 inside. The amount of air to be passed through the second pipe 39 of the intake duct 37 is regulated depending on the opening degree of the throttle valve 42.

As shown in Fig. 3, at least a part of the second pipe 39 is provided under the concave portion 30e of the air cleaner 30. In this way, at least a part of the second pipe 39 is arranged to overlap the air cleaner 30 when seen in a side view. According to the present preferred embodiment, the material of the first pipe 38 and the material of the second pipe 39 are different from each other. The materials of the first pipe 38 and the second pipe 39 may be the same.

As shown in Fig. 6, the first pipe 38 includes the first portion 37a that extends backward from the air cleaner 30, the second portion 37b provided behind the first portion 37a and curved downward, and the third portion 37c provided under the second portion 37b and curved forward. As shown in Fig. 3, the intake amount regulator 40 is provided in front of the third portion 37c. The intake duct 37 has a curved structure so that it can have a sufficient length. Because of the sufficient length, the intake duct 37 can have a sufficient capacity. In this way, the engine 8 can fully carry out its performance.

As shown in Fig. 3, the second pipe 39 corresponds to the fourth portion 37d of the intake duct 37. One end of the fourth portion 37d is connected to the front part of the intake amount regulator 40. The fourth portion 37d extends forward from the front part of the intake regulator 40 and then downward. The other end of the fourth portion 37d is connected to the engine 8.

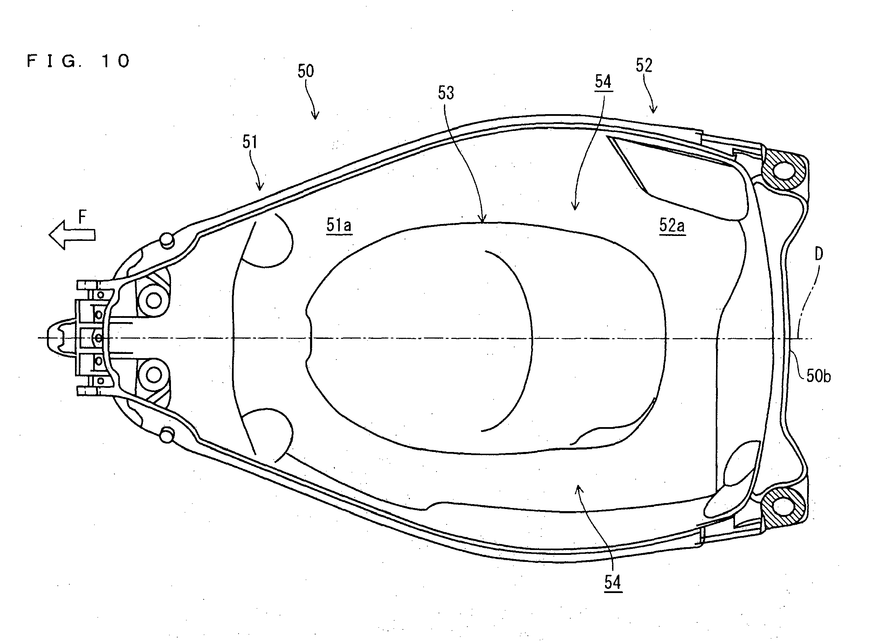

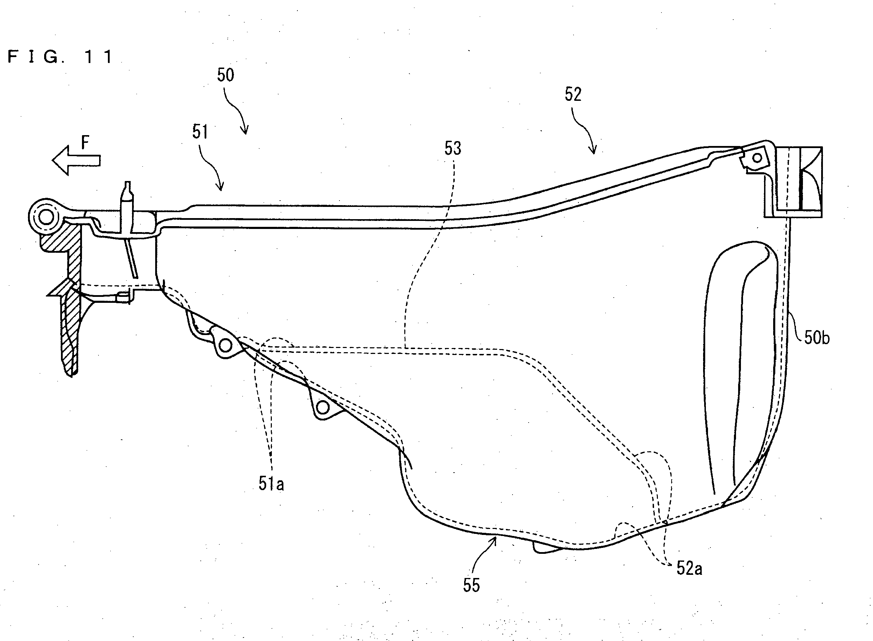

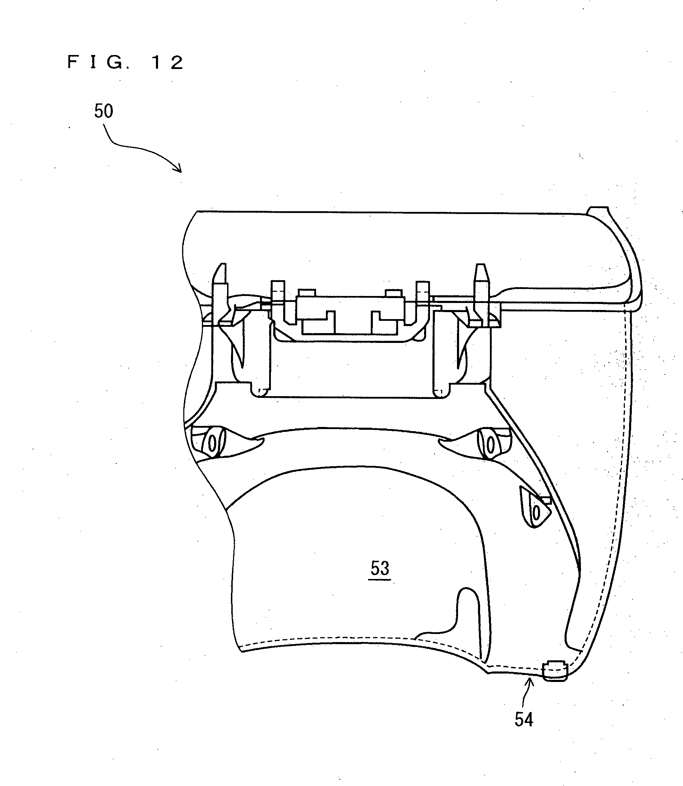

Fig. 10 is a plan view of the storage box 50. Fig. 11 is a left side view of the storage box 50. Fig. 12 is a front view of the storage box 50. As shown in Figs. 10 and 11, the storage box 50 has a front portion 51 and a rear portion 52. The front portion 51 is positioned under the first portion 3b of the seat 3. The rear portion 52 is positioned under the second portion 3c of the seat 3. The front portion 51 and the rear portion 52 are continuous in the front-back direction.

The front portion 51 is positioned under the first portion 3b of the seat 3 and over the air cleaner 30 (Figs. 2 and 5). The front portion 51 has a bottom surface 51a that supports a stored item. The rear portion 52 is continuous with the rear part of the front portion 51. The rear portion 52 is positioned above the engine 8 and under the second portion 3c of the seat 3 (Figs. 2 and 3). The rear portion 52 has a bottom surface 52a that supports a stored item. The bottom surface 52a of the rear portion 52 is continuous with the bottom surface 51a of the front portion 51.

The rear end of the rear portion 52, in other words, the rear end 50b of the storage box is positioned behind the rear end 37f of the intake path 37 (Figs. 2 and 3). In Fig. 3, the vertical line through the rear end 37f of the intake path 37 is indicated by a virtual line.

As shown in Fig. 11, at least a part of the bottom surface 52a of the rear portion 52 is provided in a position lower than the bottom surface 51a of the front portion 51. More specifically, the bottom surface 52a of the rear part of the rear portion 52 is provided in a position lower than the bottom surface 51a of the front portion 51.

As shown in Figs 11 and 12, an upward concave portion 53 is formed at the bottom 55 of the storage box 50. As shown in Figs. 11 and 12, the concave portion 53 is positioned approximately in the center of the storage box 50 with respect to the front-back direction of the vehicle. The concave portion 53 is positioned approximately in the center of the storage box 50 with respect to the vehicle left-right direction.

As shown in Fig. 11, at least a part of the bottom surface 51a of the bottom 55 extends backward and downward. At least a part of the bottom surface 52a of the bottom 55 extends in the front-back direction when seen in the side view. The concave portion 53 is open forward and downward at the bottom 55 of the storage box 50 (for example in Figs. 11 and 13).

Fig. 13 is a perspective view of the air cleaner 30 and the storage box 50 as seen from the lower left. As shown in Fig. 13, a part of the intake duct 37 is provided under the concave portion 53 of the storage box 50. In this way, the storage box 50 and a part of the intake duct 37 overlap each other when seen in a side view. According to the present preferred embodiment, at least a part of the first pipe 38 is provided under the concave portion 53 so that the storage box 50 and at least the part of the first pipe 38 overlap each other when seen in a side view.

According to the present preferred embodiment, a part of the funnel portion 33 is provided under the concave portion 53 of the storage box 50. As shown in Fig. 8, the funnel portion 33 has a smaller width in the vehicle left-right direction than those of the front case 31 and the rear case 32. The storage box 50 can be provided in a low position and still have a large capacity by arranging the funnel portion 33 with a relatively small capacity and the storage box 50 in an overlapped manner when seen in a side view. However, the shape of the air cleaner 30 is not limited to the shape according to the present preferred embodiment. A structure without the funnel portion may be employed. The air cleaner 30 may be provided entirely in front of concave portion 53 or partly under the concave portion 53.

As shown in Fig. 10, the concave portion 53 of the storage box 50 overlaps the central line D of the storage box 50 that extends in the front-back direction. The central line D of the storage box 50 approximately coincides with the central line C1 of the seat 3 shown in Fig. 5. The concave portion 53 of the storage box 50 is formed to extend in the front-back direction in a vicinity of the center in the vehicle left-right direction. The intake duct 37 provided under the concave portion 53 can be arranged straight in the front-back direction when seen in a plan view. In the storage box 50, an outer bottom 54 positioned below the bottom surface of the concave portion 53 is formed on the outer side than the concave portion 53 in the vehicle left-right direction (Fig. 12). In the storage box 50, the outer bottom 54 in a position below the bottom surface of the concave portion 53 is formed behind the concave portion 53 in the vehicle front-back direction. The outer bottom 54 is formed at the left and right sides and the back of the concave portion 53. The part of the outer bottom 54 formed at the left and right sides of the concave portion 53 is a region that extends across the bottom 51a and the bottom 52a. The part of the outer portion 54 formed at the back of the concave portion 53 is included in the bottom 52a.

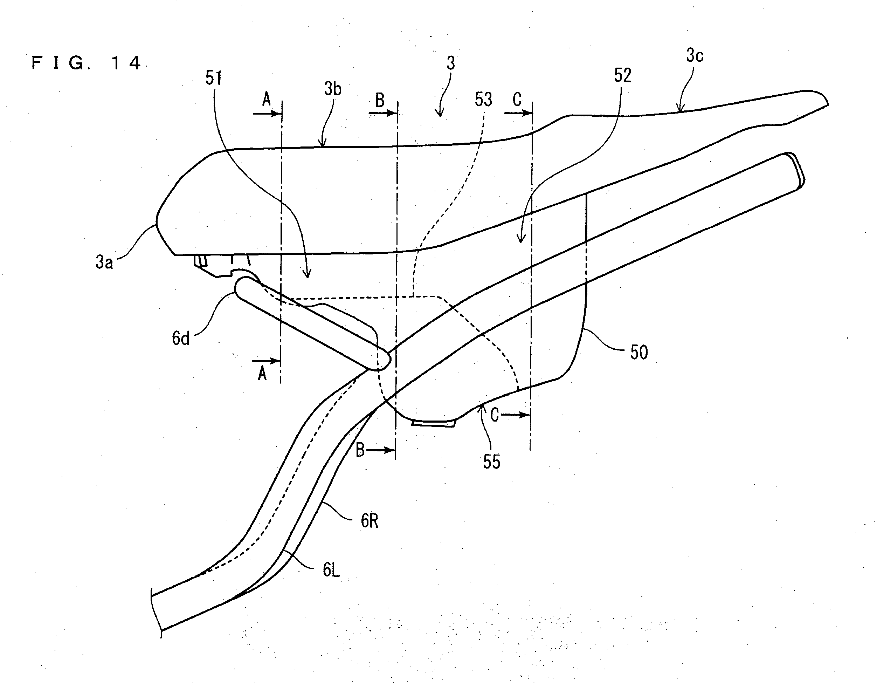

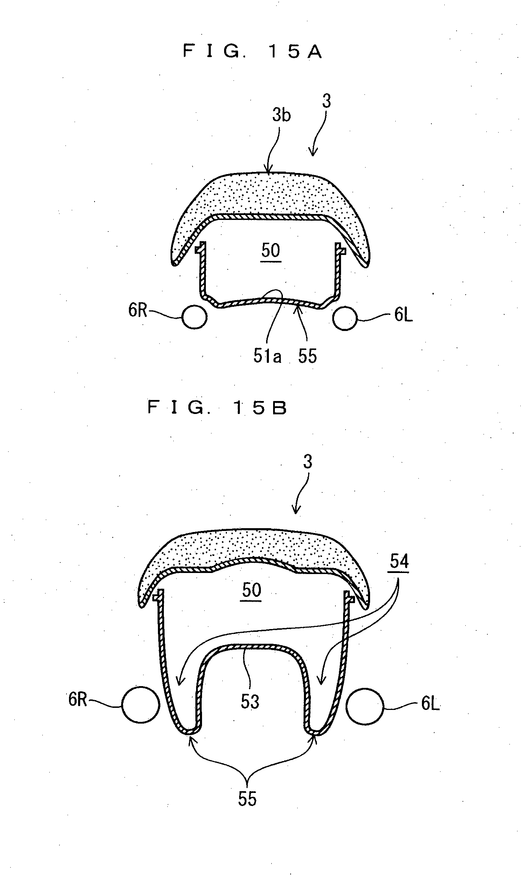

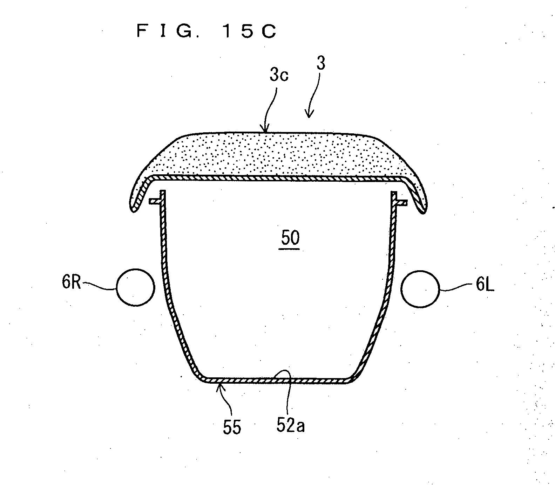

Fig. 14 is a side view of the seat 3 and a peripheral structure of the storage box 50. Figs. 15A to 15C are front sectional views of the seat 3 and the storage box 50. Fig. 15A is a sectional view taken along line A-A in Fig. 14, Fig. 15B is a sectional view taken along line B-B in Fig. 14, and Fig. 15C is a sectional view taken along line C-C in Fig. 14.

The position of the line A-A in Fig. 14 corresponds to the first portion 3b of the seat 3. The position of the line B-B in Fig. 14 corresponds to the position where the concave portion 53 of the storage box 50 is formed. The position of the line C-C in Fig. 14 corresponds to the second portion 3c of the seat 3.

As shown in Fig. 15A, in the position of the line A-A in Fig. 14, the bottom 55 of the storage box 50 is formed by the bottom surface 51a of the front portion 51. As shown in Fig. 15B, in the position of the line B-B in Fig. 14, the concave portion 53 and the outer bottom 54 on the left and right of the concave portion are formed at the bottom 55 of the storage box 50. As shown in Fig. 15C, in the position of the line C-C in Fig. 14, the bottom 55 of the storage box 50 is formed by the bottom surface 52a of the rear portion 52.

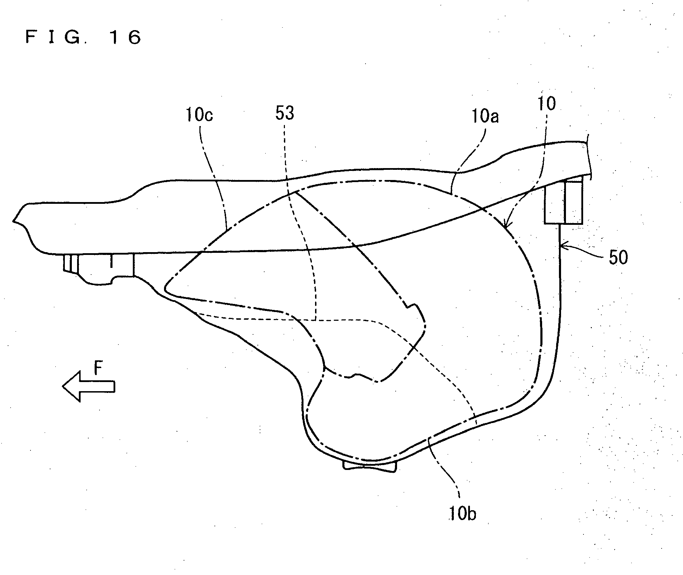

Fig. 16 is a left side view of the storage box 50 having a helmet 10 stored therein. As shown in Fig. 16, the jet type helmet 10 has an approximately hemispherical type main body 10a and projections 10b that extend downward from the left and right ends of the main body 10a. The projections 10b are covers used to protect the ears of a person wearing the helmet 10. The concave portion 53 extends into the main body 10a and the left and right projections 10b enter the outer bottom 54 on the left and right of the concave portion (Fig. 12), so that the helmet 10 is stored in the storage box 50. The helmet 10 includes a visor 10c used to shield the face of a person wearing the helmet 10. The visor 10c is movable in the vertical direction at the front side of the helmet 10. The helmet 10 is stored in the storage box 50 in a state where the visor 10c is moved upside. In this way, the storage box 50 has a conformable shape to the shape of the jet type helmet 10.

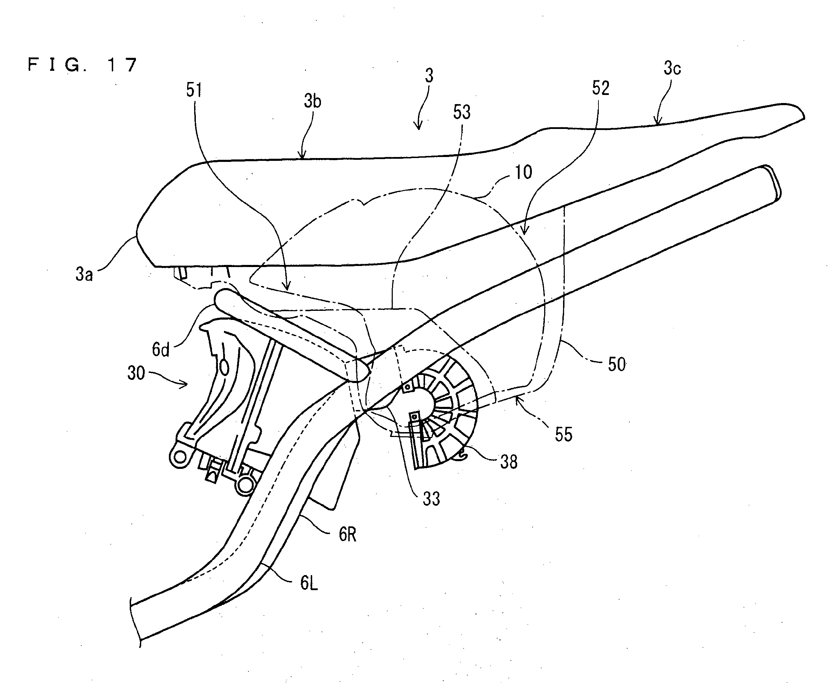

Fig. 17 is a view showing the positional relation between the air cleaner 30 and the storage box 50. As described above, according to the present preferred embodiment, a part of the first pipe 38 connected to the air cleaner 30 is provided under the concave portion 53 formed in the storage box 50. Also according to the present preferred embodiment, the funnel portion 33 of the air cleaner 30 is provided under the concave portion 53 formed in the storage box 50. The rear portion of the air cleaner 30 is provided to overlap the storage box 50 when seen in a side view and these components can be stored in a compact manner. The pipe portion and the funnel portion with a smaller capacity than that of the main body of the air cleaner 30 are arranged to overlap the storage box 50, so that the storage box 50 can have a sufficient capacity.

The inventors have focused on a shape of a motorcycle seat and come up with an idea for efficiently expanding the capacity of a storage box. In a motorcycle provided with a footboard arranged in a low position, the seat has its width increased from the front end of the seat toward the back. This is because a rider can easily place the feet on the footboard in this way.

Stated differently, the seat has a first portion whose width in the vehicle left-right direction at the rear end is greater than the width of the front end of the seat in the vehicle left-right direction and a second portion having at least a part whose width in the vehicle left-right direction is greater than the width of the front end in the vehicle left-right direction. The first portion of the seat has a small width in the vehicle left-right direction and the second portion has a greater width than the first portion. The air cleaner and the storage box preferably have a relatively large capacity. It is preferable that the storage box has not only a large capacity but also a shape that has a sufficient size each in the vertical (height-wise) direction, the left-right direction, and the front-end direction so that items in various shapes can be stored.

The inventors have paid attention to the fact that the air cleaner has more flexibility in shape than the storage box. The inventors have come up with the idea of making the most of the lower part of the second portion of the seat having the larger width as a storage space while providing the air cleaner under the first portion of the seat with the smaller width. In this way, in the motorcycle including a flat footboard, water, dust or the like coming into the air cleaner can be reduced and the capacity of the storage box can efficiently be increased without degrading the rider's comfort.

As in the foregoing, in the motorcycle 1 according to the present preferred embodiment, the seat 3 has the first portion 3b positioned in the front and the second portion 3c positioned behind the first portion 3b. The width of the rear end of the first portion 3b in the vehicle left-right direction is formed greater than the width of the front end of the seat in the vehicle left-right direction. The second portion 3c has at least a part whose width in the vehicle left-right direction is wider than the width of the front end of the seat in the vehicle left-right direction (Fig. 5). The storage box 50 has the front portion 51 and the rear portion 52 (Fig. 11). The front portion 51 has the bottom surface 51a that supports a stored item and is positioned under the first portion 3b of the seat 3 and over the air cleaner 30. The rear portion 52 has the bottom surface 52a that supports a stored item and is positioned under the second portion 3c of the seat 3.

The air cleaner 30 is provided under the first portion 3b of the seat 3 having a relatively small width. The rear portion 52 of the storage box 50 is provided under the second portion 3c of the seat 3 having a larger width than the first portion 3b. The storage box 50 has a greater length in the left-right direction in the rear portion 52 than in the front portion 51. Furthermore, the intake path is connected to the rear part of the air cleaner 30. The intake path has a smaller width in the vehicle left-right direction than that of the air cleaner 30. Therefore, the storage box 50 can have a greater capacity than the case in which the intake path is connected to the front part of the air cleaner 30. In the motorcycle 1 including the footboard 4, water, dust or the like coming into the air cleaner 30 can be reduced, and the capacity of the storage box 50 can efficiently be increased without degrading the rider's comfort.

Unlike the present invention, if the intake path is connected to the front part of the air cleaner case 30, a space is formed around the intake path. In this case, a space is formed between the intake path and the vehicle body cover. This prevents the limited space under the seat 3 from being efficiently used. According to the present invention, the space under the seat 3 can be used efficiently. If the intake path is connected to the front part of the air cleaner 30, the air cleaner 30 is provided on the rear side for the space in which the intake path is provided. In this way, the capacity of the storage box 50 is reduced accordingly. According to the present invention, the intake path is provided behind the air cleaner 30 and the air cleaner 30 is moved more on the front side, so that the storage box can have a sufficient capacity.

According to the present preferred embodiment, at least a part of the lower surface of the rear portion 52 is provided below the lower surface of the front portion 51. Since the air cleaner 30 is not positioned under the rear portion 52, the storage box 50 can have a large size in the vertical direction.

According to the present preferred embodiment, the rear end of the storage box 50 is positioned behind the rear end of the intake path. The storage box 50 can have a large size in the front-back direction.

According to the present preferred embodiment, the intake amount regulator 40 is provided behind the air cleaner 30 and under the storage box 50 when seen in a side view. The air cleaner 30 that has a relatively large capacity is provided in the front part and the intake amount regulator 40 that has a smaller capacity than the air cleaner 30 is provided in the back (Fig. 2). In the storage box 50 positioned above the air cleaner 30 and the intake amount regulator 40, a large storing space can be secured in a region having a large width in the vehicle left-right direction (including the rear portion 52 and the rear portion of the front portion 51).

According to the present preferred embodiment, the intake path has the first pipe 38 used to connect the air cleaner 30 and the intake amount regulator 40 and the second pipe 39 used to connect the intake amount regulator 40 and the upper surface of the cylinder 8a. The upward concave portion 30e is formed at the bottom of the air cleaner 30 and the second pipe 39 is provided under the concave portion 30e to overlap the air cleaner 30 when seen in a side view. The air cleaner 30 can be provided in a lower position. In this way, the storage box 50 can have a sufficient capacity while a sufficient capacity is secured for the air cleaner 30.

According to the present preferred embodiment, the first pipe 38 has the first portion 37a, the second portion 37b, and the third portion 37c. The first portion 37a is connected to the air cleaner 30 and extends backward. The second portion 37b is provided behind the first portion 37a and curved downward. The third portion 37c is provided under the second portion 37b, curved toward the front and connected to the intake amount regulator 40. In this way, the narrow space is used effectively and the intake path can have a sufficient length. The air cleaner 30 can have a sufficient capacity and the intake path can have a sufficient length, so that the performance of the engine 8 can be improved. The intake amount regulator 40 is provided in a lower position than in a case where the intake amount regulator 40 is provided in a path from the first portion 37a to the third portion 37c. In this way, the storage box 50 can have an increased capacity above the intake path.

According to the present preferred embodiment, the air outlet 30b of the air cleaner 30 has a section whose vertical maximum length is shorter than its horizontal maximum length. The connection portion 37e of the intake duct 37 connected to the air outlet 30b has a section whose vertical maximum length is shorter than its horizontal maximum length accordingly. The vertical capacity occupied in the intake path is reduced as compared to when the shape of the intake path is a normal circle. The bottom 55 of the storage box 50 can be provided in a lower position. In this way, the capacity of the storage box 50 is increased.

According to the present preferred embodiment, the air cleaner 30 has an air inlet 30a at the front surface portion facing the front. The motorcycle 1 has a front cover 20 that is provided in front of the air cleaner 30 and extends upward from the rear part of the footboard 4. Water, dust and the like coming into the air cleaner can be reduced effectively.

According to the present preferred embodiment, the air inlet 30a is provided above the midpoint of the front surface portion of the air cleaner 30 in the vertical direction. Air taken in from the air inlet 30a can be prevented from being heated by the engine 8 provided under the air cleaner 30. Air at lower temperature is introduced into the air cleaner 30. Since the air inlet 30a is provided relatively on the higher side, mud, dust or the like splashed from the ground is less likely to come into the air cleaner 30.

According to the present preferred embodiment, the fuel tank 9 is provided above the power unit 7, under the seat 3, and behind the storage box 50. The fuel tank 9 does not interfere with the storage box 50 with respect to the vertical direction, and the storage box 50 can have a sufficient capacity with respect to the vertical direction.

According to the present preferred embodiment, the concave portion 53 is formed at the bottom of the storage box 50, so that an upward protrusion is formed at the bottom of the inner space of the storage box 50. The jet type helmet 10 having an approximately hemispherical type main body 10a and projections 10b that extend downward from the left and right ends of the main body 10a can be stored efficiently. More specifically, the jet type helmet 10 can be stored by having the protrusion at the bottom of the storage box 50 enter the inside space of the main body 10a.

According to the present preferred embodiment, the concave portion 53 overlaps the central line C1 of the seat 3 that extends in the vehicle front-back direction when seen in a plan view. The intake path can be provided in the center in the vehicle left-right direction. The width of the vehicle in the left-right direction is not increased.

According to the present preferred embodiment, the concave portion 30e overlaps the central line C1 of the seat 3 that extends in the vehicle front-back direction when seen in a plan view. The intake path can be provided in the center in the vehicle left-right direction. The width of the vehicle in the left-right direction is not increased.

According to the present preferred embodiment, the motorcycle 1 includes a vehicle body frame 6 that supports the power unit 7 in a swingable manner. The air cleaner 30 is supported swingably at the vehicle frame 6 together with the power unit 7. The air cleaner 30 swings in the vertical direction. A gap used to prevent interference is necessary between the upper part of the air cleaner 30 and the bottom of the storage box 50. In the motorcycle including the air cleaner 30 that swings, the storage box 50 cannot have a sufficient capacity. According to the present preferred embodiment, the storage box 50 can have a sufficient capacity as described above.

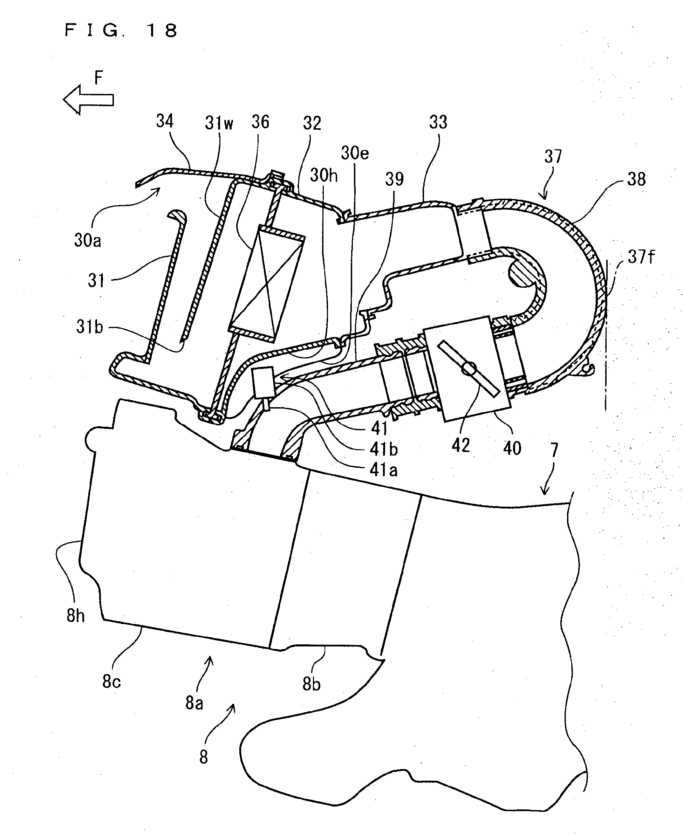

Referring to Fig. 18, a second preferred embodiment of the present invention will be described. Fig. 18 is a left side sectional view of an engine 8 and a peripheral structure of an air cleaner 30 according to the second preferred embodiment. In the first preferred embodiment, the intake amount regulator 40 of the motorcycle 1 is a carburetor. The motorcycle 1 according to the second preferred embodiment includes a throttle body instead of the carburetor. A fuel injector 41 used to inject fuel toward the intake port of the cylinder 8 is provided in the intake duct 37. In the second preferred embodiment, the same elements as those in the first preferred embodiment are designated by the same reference characters and their description will not be repeated.

As shown in Fig. 18, the intake amount regulator 40 includes a throttle valve 42. The amount of air to be passed through the second pipe 39 of the intake duct 37 is regulated according to the opening degree of the throttle valve 42. The fuel injector 41 is provided in the intake duct 37. According to the second preferred embodiment, the fuel injector 41 is provided in the second pipe 39. The angle formed by the direction in which the nozzle 41a and the injector main body 41b of the fuel injector 41 extend and the direction in which the second pipe 39 extends is not particularly limited. For example, the fuel injector 41 may be provided in any position of the second pipe 39 or may be attached to the cylinder head. The position of the fuel injector 41 in the second pipe 39 is not particularly limited. The number of fuel injectors 41 in the intake duct 37 is not particularly limited.

As shown in Fig. 18, the air cleaner 30 has a concave portion 30h. The concave portion 30h is hollowed more into the air cleaner 30 than the concave portion 30e in the first preferred embodiment. The intake amount regulator 40 and the fuel injector 41 have a capacity smaller than the air cleaner 30 and are provided behind the air cleaner 30 and under the storage box 50 when seen in a side view. The fuel tank 9 is connected to the intake amount regulator 40 through the fuel hose 19.

According to the present invention, the air cleaner 30 has the air inlet 30a in the front part and the air outlet 30b in the rear part. The air cleaner 30 introduces air from the front and discharges air to the back.

According to the preferred embodiments described above, at least a part of the second pipe 39 of the intake duct 37 overlaps the air cleaner 30 when seen in the side view (Fig. 3). The air cleaner 30 and the intake duct 37 do not have to overlap when seen in a side view and may be apart from each other in the vertical direction. In this case, the concave portion 30e does not have to be formed in the air cleaner 30.

According to the preferred embodiments described above, as shown in Fig. 2, the power unit 7 is supported at the vehicle body frame 6 on its lower side. The power unit 7 may be supported at the vehicle body frame on its upper side.

According to the preferred embodiments described above, the concave portion 53 of the storage box 50 is formed across the box front part 51 and the box rear part 52 as shown in Fig. 5. The concave portion 53 may be formed only in the box front part 51 of the storage box 50.

According to the preferred embodiments described above, at least a part of the second pipe 39 of the intake path 37 overlaps the air cleaner 30 in a side view. The air cleaner 30 and the intake path 37 do not have to overlap in a side view and may be provided apart from each other in the vertical direction. In this case, the concave portion 30e does not have to be formed in the air cleaner 30. According to the preferred embodiments described above, the air cleaner 30 has the concave portion 30e. However, the air cleaner 30 may have a notch along the entire width of the overlapped part with the intake duct 37 when seen in a side view instead of forming the concave portion 30e.

According to the preferred embodiments described above, the vehicle body cover 5 has the front cover 5d, the under cover 5c, and the rear cover 5a. The structure of the vehicle body cover 5 of the motorcycle 1 is not limited to the structure of the above described preferred embodiments.

According to the preferred embodiments described above, the cylinder body 8b, the cylinder head 8c and the head cover 8h are formed discretely. The cylinder head 8c and the head cover 8h may be formed integrally.

While preferred embodiments of the present invention have been described above, it is to be understood that variations and modification will be apparent to those skilled in the art without departing the scope of the present invention. The scope of the present invention, therefore, is to be determined solely by the following claims.

## Claims

1. A motorcycle (1), comprising:
a power unit (7) including an engine (8) having a cylinder (8a) inclined forward;
a seat (3) provided over the power unit (7);
a footboard (4) having at least a part provided in front of the seat (3) when seen in a plan view;
an air cleaner (30) provided above the power unit (7) and under the seat (3) and having an air outlet (30b);
an intake path (37) that connects the air outlet (30b) of the air cleaner (30) and an upper surface of the cylinder (8a); and
a storage box (50) provided above the power unit (7) and under the seat (3),
the seat (3) comprising:
a first portion (3b) that extends backward from a front end (3a) of the seat (3); and a second portion (3c) provided behind the first portion (3b),
the width of the rear end of the first portion (3b) in the vehicle left-right direction being larger than the width of the front end (3a) in the vehicle left-right direction,
the second portion (3c) having at least a part whose width in the vehicle left-right direction being larger than the width of the front end (3a),
the air cleaner (30) being provided under the first portion (3b) of the seat (3) and over the cylinder (8a),
the storage box (50) comprising:
a front portion (51) positioned under the first portion (3b) of the seat (3) and over the air cleaner (30); and
a rear portion (52) positioned under the second portion (3c) of the seat (3),
**characterized in that**
the air outlet (30b) is formed at a rear surface (30d) of the air cleaner (30);
the storage box (50) further comprises a first concave portion (53) hollowed upward being formed at a bottom (55) of the storage box (50) so as to open forward and downward, and
the intake path (37) extends backward from the air outlet (30b) and is provided under the first concave portion (53), the storage box (50) and the intake path (37) overlapping each other in a side view.

2. The motorcycle (1) according to claim 1, wherein at least a part of a lower surface of the rear portion (52) is provided below a lower surface of the front portion (51).

3. The motorcycle (1) according to claim 1 or 2, wherein a rear end (50b) of the storage box (50) is positioned behind a rear end (37f) of the intake path (37).

4. The motorcycle (1) according to any one of claims 1 to 3, wherein the intake path (37) has an intake amount regulator (40) used to regulate the amount of air to be passed in the intake path (37), and
the intake amount regulator (40) is provided behind the air cleaner (30) and under the storage box (50) when seen in a side view.

5. The motorcycle (1) according to claim 4, wherein the intake path (37) has a first duct (38) that connects the air outlet (30b) of the air cleaner (30) and the intake amount regulator (40), and a second duct (39) that connects the intake amount regulator (40) and an upper surface of the cylinder (8a),
a second concave portion (30e) hollowed upward is formed at a bottom of the air cleaner (30), and
the second duct (39) is provided under the second concave portion (30e) to overlap the air cleaner (30) when seen in a side view.

6. The motorcycle (1) according to claim 5, wherein the first duct (38) has a first portion (37a) connected to the air outlet (30b) of the air cleaner (30) to extend backward,
a second portion (37b) provided behind a rear portion of the first portion (37a) and curved downward, and
a third portion (37c) provided under the second portion (37b) and curved forward to be connected to the intake amount regulator (40).

7. The motorcycle (1) according to any one of claims 1 to 6, wherein the air outlet (30b) of the air cleaner (30) has a section whose maximum length in the vertical direction is shorter than its maximum length in the horizontal direction, and a connection part (37e) of the intake path (37) connected with the air outlet (30b) has a section whose maximum length in the vertical direction is shorter than its maximum length in the horizontal direction.

8. The motorcycle (1) according to any one of claims 1 to 7, wherein the air cleaner (30) has the air outlet (30b) facing the rear and an air inlet (30a) at a front surface portion facing the front,
the motorcycle (1) further comprising a vehicle body cover (20) provided in front of the air cleaner (30) to extend upward from a rear portion of the footboard (4).

9. The motorcycle (1) according to claim 8, wherein the air inlet (30a) is provided above the midpoint of the air cleaner (30) in the vertical direction at the front surface portion.

10. The motorcycle (1) according to any one of claims 1 to 9, further comprising a fuel tank (9) provided above the power unit (7), under the seat (3), and behind the storage box (50).

11. The motorcycle (1) according to any one of claims 1 to 10, wherein the first concave portion (53) is formed at the bottom of the storage box (50), so that a raised portion protruding upward is formed at the bottom of the inside space of the storage box (50).

12. The motorcycle (1) according to any one of claims 1 to 11, wherein the first concave portion (53) overlaps the central line (C1) of the seat (3) that extends in the vehicle front-back direction when seen in a plan view.

13. The motorcycle (1) according to claim 5, wherein the second concave portion (30e) overlaps the central line (C1) of the seat (3) that extends in the vehicle front-back direction when seen in a plan view.

14. The motorcycle (1) according to any one of claims 1 to 13, further comprising a vehicle body frame (6) that supports the power unit (7) in a swingable manner, wherein the air cleaner (30) is supported swingably together with the power unit (7) relative to the vehicle body frame (6).

## Patentansprüche

1. Motorrad (1), umfassend:
eine Antriebseinheit (7) einschließlich eines Motors (8) mit einem nach vorne geneigten Zylinder (8a),
einen Sitz (3), der über der Antriebseinheit (7) vorgesehen ist,
ein Trittbrett (4), das von oben gesehen wenigstens einen vor dem Sitz (3) vorgesehenen Teil aufweist,
einen Luftreiniger (30), der über der Antriebseinheit (7) und unter dem Sitz (3) vorgesehen ist und einen Luftauslass (30b) aufweist,
einen Einlasspfad (37), der den Luftauslass (30b) des Luftreinigers (30) mit einer oberen Fläche des Zylinders (8a) verbindet, und
einen Aufbewahrungskasten (50), der über der Antriebseinheit (7) und unter dem Sitz (3) vorgesehen ist,
wobei der Sitz (3) umfasst:
einen ersten Teil (3b), der sich von einem vorderen Ende (3a) des Sitzes (3) nach hinten erstreckt, und einen zweiten Teil (3c), der hinter dem ersten Teil (3b) vorgesehen ist,
wobei die Breite des hinteren Endes des ersten Teils (3b) in der Links-Rechts-Richtung des Fahrzeugs größer als die Breite des vorderen Endes (3a) in der Links-Rechts-Richtung des Fahrzeugs ist,
wobei der zweite Teil (3c) wenigstens einen Teil aufweist, dessen Breite in der Links-Rechts-Richtung des Fahrzeugs größer als die Breite des vorderen Endes (3a) ist,
wobei der Luftreiniger (30) unter dem ersten Teil (3b) des Sitzes (3) und über dem Zylinder (8a) vorgesehen ist,
wobei der Aufbewahrungskasten (50) umfasst:
einen vorderen Teil (51), der unter dem ersten Teil (3b) des Sitzes (3) und über dem Luftreiniger (30) angeordnet ist, und
einen hinteren Teil (52), der unter dem zweiten Teil (3c) des Sitzes (3) angeordnet ist,
**dadurch gekennzeichnet, dass**
der Luftauslass (30b) an einer Rückfläche (30d) des Luftreinigers (30) ausgebildet ist,
der Aufbewahrungskasten (50) weiterhin einen ersten konkaven Teil (53) umfasst, der sich nach oben höhlt und an einem Boden (55) des Aufbewahrungskastens (50) derart ausgebildet ist, dass er sich nach vorne und unten öffnet, und
sich der Einlasspfad (37) nach hinten von dem Luftauslass (30b) erstreckt und unter dem ersten konkaven Teil (53) vorgesehen ist, wobei der Aufbewahrungskasten (50) und der Einlasspfad (37) von der Seite gesehen einander überlappen.

2. Motorrad (1) nach Anspruch 1, wobei wenigstens ein Teil einer unteren Fläche des hinteren Teils (52) unter einer unteren Fläche des vorderen Teils (51) vorgesehen ist.

3. Motorrad (1) nach Anspruch 1 oder 2, wobei ein hinteres Ende (50b) des Aufbewahrungskastens (50) hinter einem hinteren Ende (37f) des Einlasspfads (37) angeordnet ist.

4. Motorrad (1) nach einem der Ansprüche 1 bis 3, wobei der Einlasspfad (37) einen Einlassmengenregler (40) aufweist, der verwendet wird, um die in dem Einlasspfad (37) zu führende Luft zu regeln, und
der Einlassmengenregler (40) von der Seite gesehen hinter dem Luftreiniger (30) und unter dem Aufbewahrungskasten (50) vorgesehen ist.

5. Motorrad (1) nach Anspruch 4, wobei der Einlasspfad (37) eine erste Leitung (38), die den Luftauslass (30b) des Luftreinigers (30) mit dem Einlassmengenregler (40) verbindet, und eine zweite Leitung (39), die den Einlassmengenregler (40) mit einer oberen Fläche des Zylinders (8a) verbindet, aufweist,
wobei ein zweiter konkaver Teil (30e), der sich nach oben höhlt, an einem Boden des Luftreinigers (30) ausgebildet ist, und
wobei die zweite Leitung (39) unter dem zweiten konkaven Teil (30e) derart vorgesehen ist, dass sie von der Seite gesehen den Luftreiniger (30) überlappt.

6. Motorrad (1) nach Anspruch 5, wobei die erste Leitung (38) einen ersten Teil (37a) aufweist, der mit dem Luftauslass (30b) des Luftreinigers (30) verbunden ist und sich nach hinten erstreckt,
einen zweiten Teil (37b), der hinter einem hinteren Teil des ersten Teils (37a) vorgesehen ist und sich nach unten krümmt, und
einen dritten Teil (37c), der unter dem zweiten Teil (37b) vorgesehen ist und sich nach vorne krümmt, um mit dem Einlassmengenregler (40) verbunden zu sein.

7. Motorrad (1) nach einem der Ansprüche 1 bis 6, wobei der Luftauslass (30b) des Luftreinigers (30) einen Abschnitt aufweist, dessen maximale Länge in der vertikalen Richtung kürzer als seine maximale Länge in der horizontalen Richtung ist, und wobei ein Verbindungsteil (37e) des mit dem Luftauslass (30b) verbundenen Einlasspfads (37) einen Abschnitt aufweist, dessen maximale Länge in der vertikalen Richtung kürzer als seine maximale Länge in der horizontalen Richtung ist.

8. Motorrad (1) nach einem der Ansprüche 1 bis 7, wobei der Luftreiniger (30) einen Luftauslass (30b), der nach hinten gewandt ist, und einen Lufteinlass (30a) an einem nach vorne gewandten Vorderflächenteil aufweist,
wobei das Motorrad (1) weiterhin eine Fahrzeugkarosserieabdeckung (20) aufweist, die derart vor dem Luftreiniger (30) vorgesehen ist, dass sie sich von einem hinteren Teil des Trittbretts (4) nach oben erstreckt.

9. Motorrad (1) nach Anspruch 8, wobei der Lufteinlass (30a) über dem Mittelpunkt des Luftreinigers (30) in der vertikalen Richtung an dem Vorderflächenteil vorgesehen ist.

10. Motorrad (1) nach einem der Ansprüche 1 bis 9, das weiterhin einen Kraftstofftank (9) aufweist, der über der Antriebseinheit (7), unter dem Sitz (3) und hinter dem Aufbewahrungskasten (50) vorgesehen ist.

11. Motorrad (1) nach einem der Ansprüche 1 bis 10, wobei der erste konkave Teil (53) an dem Boden des Aufbewahrungskastens (50) derart ausgebildet ist, dass ein nach oben vorstehender erhobener Teil an dem Boden des Innenraums des Aufbewahrungskastens (50) ausgebildet ist.

12. Motorrad (1) nach einem der Ansprüche 1 bis 11, wobei der erste konkave Teil (53) von oben gesehen die Mittenlinie (C1) des sich in der Vorne-Hinten-Richtung des Fahrzeugs erstreckenden Sitzes (3) überlappt.

13. Motorrad (1) nach Anspruch 5, wobei der zweite konkave Teil (30e) von oben gesehen die Mittenlinie (C1) des sich in der Vorne-Hinten-Richtung des Fahrzeugs erstreckenden Sitzes (3) überlappt.

14. Motorrad (1) nach einem der Ansprüche 1 bis 13, das weiterhin einen Fahrzeugkarosserierahmen (6) umfasst, der die Antriebseinheit (7) schwenkbar hält, wobei der Luftreiniger (30) schwenkbar zusammen mit der Antriebseinheit (7) relativ zu dem Fahrzeugkarosserierahmen (6) gehalten wird.

## Revendications

1. Motocyclette (1) comprenant :
une unité génératrice (7) comportant un moteur (8) ayant un cylindre (8a) incliné vers l'avant ;
un siège (3) pourvu par-dessus l'unité génératrice (7) ;
un marchepied (4) comportant au moins une partie pourvue devant le siège (3) en vue en plan ;
un épurateur d'air (30) pourvu au-dessus de l'unité génératrice (7) et sous le siège (3) et comportant une sortie d'air (30b) ;
un chemin d'admission (37) qui connecte la sortie d'air (30b) de l'épurateur d'air (30) à une surface supérieure du cylindre (8a) ; et
un coffre de rangement (50) pourvu au-dessus de l'unité génératrice (7) et sous le siège (3),
le siège (3) comprenant :
une première portion (3b) qui s'étend vers l'arrière depuis une extrémité avant (3a) du siège (3) ; et une deuxième portion (3c) pourvue derrière la première portion (3b),
la largeur de l'extrémité arrière de la première portion (3b) en direction gauche-droite du véhicule étant supérieure à la largeur de l'extrémité avant (3a) en direction gauche-droite du véhicule,
la deuxième portion (3c) comportant au moins une partie dont la largeur en direction gauche-droite du véhicule est supérieure à la largeur de l'extrémité avant (3a),
l'épurateur d'air (30) étant pourvu sous la première portion (3b) du siège (3) et par-dessus le cylindre (8a),
le coffre de rangement (50) comprenant :
une portion avant (51) positionnée sous la première portion (3b) du siège (3) et par-dessus l'épurateur d'air (30) ; et
une portion arrière (52) positionnée sous la deuxième portion (3c) du siège (3),
**caractérisée en ce que**
la sortie d'air (30b) est formée sur une surface arrière (30d) de l'épurateur d'air (30) ;
le coffre de rangement (50) comprend en outre une première portion concave (53) évidée vers le haut, qui est formée au fond (55) du coffre de rangement (50) de manière à s'ouvrir vers l'avant et vers le bas, et
le chemin d'admission (37) s'étend vers l'arrière à partir de la sortie d'air (30b) et est pourvu sous la première portion concave (53), le coffre de rangement (50) et le chemin d'admission (37) se recouvrant mutuellement en vue de côté.

2. Motocyclette (1) selon la revendication 1, dans laquelle au moins une partie de la surface inférieure de la portion arrière (52) est pourvue sous une surface inférieure de la portion avant (51).

3. Motocyclette (1) selon la revendication 1 ou 2, dans laquelle une extrémité arrière (50b) du coffre de rangement (50) est positionnée derrière une extrémité arrière (37f) du chemin d'admission (37).

4. Motocyclette (1) selon l'une quelconque des revendications 1 à 3, dans laquelle
le chemin d'admission (37) comporte un régulateur de quantité d'admission (40) utilisé pour réguler la quantité d'air qui doit passer dans le chemin d'admission (37), et
le régulateur de quantité d'admission (40) est pourvu derrière l'épurateur d'air (30) et sous le coffre de rangement (50) en vue de côté.

5. Motocyclette (1) selon la revendication 4, dans laquelle le chemin d'admission (37) comporte
un premier conduit (38) qui connecte la sortie d'air (30b) de l'épurateur d'air (30) au régulateur de quantité d'admission (40), et un deuxième conduit (39) qui connecte le régulateur de quantité d'admission (40) à une surface supérieure du cylindre (8a),
une deuxième portion concave (30e) évidée vers le haut est formée sur un fond de l'épurateur d'air (30), et
le deuxième conduit (39) est pourvu sous la deuxième portion concave (30e) pour recouvrir l'épurateur d'air (30) en vue de côté.

6. Motocyclette (1) selon la revendication 5, dans laquelle le premier conduit (38) comporte
une première portion (37a) connectée à la sortie d'air (30b) de l'épurateur d'air (30) pour s'étendre vers l'arrière,
une deuxième portion (37b) pourvue derrière une portion arrière de la première portion (37a) et incurvée vers le bas, et
une troisième portion (37c) pourvue sous la deuxième portion (37b) et incurvée vers l'avant pour être connectée au régulateur de quantité d'admission (40).

7. Motocyclette (1) selon l'une quelconque des revendications 1 à 6, dans laquelle la sortie d'air (30b) de l'épurateur d'air (30) présente une section dont la longueur maximale en direction verticale est inférieure à sa longueur maximale en direction horizontale, et une pièce de connexion (37e) du chemin d'admission (37) connectée à la sortie d'air (30b) présente une section dont la longueur maximale en direction verticale est inférieure à sa longueur maximale en direction horizontale.

8. Motocyclette (1) selon l'une quelconque des revendications 1 à 7, dans laquelle l'épurateur d'air (30) comporte une sortie d'air (30b) qui fait face à l'arrière et une entrée d'air (30a) sur une partie de surface avant qui fait face à l'avant,
la motocyclette (1) comprenant en outre un carénage de corps de véhicule (20) pourvu devant l'épurateur d'air (30) pour s'étendre vers le haut à partir d'une portion arrière du marchepied (4).

9. Motocyclette (1) selon la revendication 8, dans laquelle l'entrée d'air (30a) est pourvue au-dessus du point médian de l'épurateur d'air (30) en direction verticale sur la partie de surface avant.

10. Motocyclette (1) selon l'une quelconque des revendications 1 à 9, comprenant en outre un réservoir de carburant (9) pourvu au-dessus de l'unité génératrice (7), sous le siège (3) et derrière le coffre de rangement (50).

11. Motocyclette (1) selon l'une quelconque des revendications 1 à 10, dans laquelle la première portion concave (53) est formée au fond du coffre de rangement (50), de telle sorte qu'une portion surélevée qui se projette vers le haut est formée au fond de l'espace intérieur du coffre de rangement (50).

12. Motocyclette (1) selon l'une quelconque des revendications 1 à 11, dans laquelle la première portion concave (53) recouvre la ligne centrale (C1) du siège (3) qui s'étend en direction avant-arrière du véhicule en vue en plan.

13. Motocyclette (1) selon la revendication 5, dans laquelle la deuxième portion concave (30e) recouvre la ligne centrale (C1) du siège (3) qui s'étend en direction avant-arrière du véhicule en vue en plan.

14. Motocyclette (1) selon l'une quelconque des revendications 1 à 13, comprenant en outre un châssis de véhicule (6) qui supporte l'unité génératrice (7) de manière pendulaire, dans laquelle l'épurateur d'air (30) est supporté de manière pendulaire conjointement à l'unité génératrice (7) par rapport au châssis du véhicule (6).
